# EUROPEAN PATENT APPLICATION

(11) **EP 4 528 448 A1**
(43) Date of publication of application: **26.03.2025**
(21) Application number: 23887972.0
(22) Date of filing: 07.11.2023
(51) Int. Cl.: G06F 3/0481

(54) **INTERACTION METHOD AND APPARATUS, ELECTRONIC DEVICE, AND STORAGE MEDIUM**

(30) Priority: 07.11.2022 CN 202211391550
(71) Applicant: Beijing Zitiao Network Technology Co., Ltd., Beijing 100190 (CN)
(72) Inventor: YANG, Pei, Beijing 100028 (CN)
(74) Representative: Williams, Michael David
(86) International application number: PCT/CN2023/130048
(87) International publication number: WO 2024/099283

(57) **Abstract**

Embodiments of the present disclosure provide an interaction method and apparatus, an electronic device, and a storage medium. The method comprises: in response to a search operation for a target object, displaying, in a search result page, at least one interaction control corresponding to the target object; and in response to a trigger operation on a target interaction control in the at least one interaction control, displaying a target animation, the target animation being an animation of a target visual element, and the target visual element being associated with the target object. According to the embodiments of the present disclosure, by using the technical solution, the interaction function supported by a search result page can be enriched, and the operation required for interaction between a user and a target object is simplified.

## Description

This application claims the priority and benefits of the Chinese Patent Applications No. 202211391550.1, which was filed on November 07, 2022, the disclosure of which is incorporated herein by reference in its entirety as part of the present application.

### TECHNICAL FIELD

Embodiments of the present disclosure relate to an interaction method and apparatus, an electronic device, and a storage medium.

### BACKGROUND

When searching for an object, a user usually can view a search result only in a search result page, and interaction forms lack diversity.

### SUMMARY

Embodiments of the present disclosure provide an interaction method and apparatus, an electronic device, and a storage medium, so as to enrich the interaction forms upon searing an object.

An embodiment of the present disclosure provides an interaction method, which includes:
displaying, in a search result page, at least one interaction control corresponding to a target object in response to a search operation for the target object; and
displaying a target animation in response to a trigger operation for a target interaction control in the at least one interaction control, wherein the target animation is an animation of a target visual element, and the target visual element is associated with the target object.

Embodiments of the present disclosure further provide an interaction apparatus, which includes:
a control display module, configured to display, in a search result page, at least one interaction control corresponding to a target object in response to a search operation for the target object; and
an animation display module, configured to display a target animation in response to a trigger operation for a target interaction control in the at least one interaction control, wherein the target animation is an animation of a target visual element, and the target visual element is associated with the target object.

Embodiments of the present disclosure further provide an electronic device, which includes:
at least one processor; and
a memory communicatively connected to the at least one processor, wherein
the memory stores a computer program that can be executed by the at least one processor, and the computer program is executed by the at least one processor, so that the at least one processor can perform the interaction method according to the embodiments of the present disclosure.

Embodiments of the present disclosure further provide a computer-readable storage medium, wherein the computer-readable storage medium stores computer instructions, and when the computer instructions are executed by a processor, the interaction method according to the embodiments of the present disclosure is implemented.

### BRIEF DESCRIPTION OF DRAWINGS

The foregoing and other features, advantages, and aspects of embodiments of the present disclosure become more apparent with reference to the following specific implementations and in conjunction with the accompanying drawings. Throughout the accompanying drawings, the same or similar reference numerals denote the same or similar elements. It should be understood that the accompanying drawings are schematic and that parts and elements are not necessarily drawn to scale.
Fig. 1 is a schematic flowchart of an interaction method according to an embodiment of the present disclosure;
Fig. 2 is a display diagram of an interaction control according to an embodiment of the present disclosure;
Fig. 3 is a display diagram of a target animation according to an embodiment of the present disclosure;
Fig. 4 is a schematic flowchart of another interaction method according to an embodiment of the present disclosure;
Fig. 5 is a block diagram of a structure of an interaction apparatus according to an embodiment of the present disclosure; and
Fig. 6 is a schematic diagram of a structure of an electronic device according to an embodiment of the present disclosure.

### DETAILED DESCRIPTION

The embodiments of the present disclosure are described in more detail below with reference to the accompanying drawings. Although some embodiments of the present disclosure are shown in the accompanying drawings, it should be understood that the present disclosure may be implemented in various forms and should not be construed as being limited to the embodiments set forth herein. Rather, these embodiments are provided for a more thorough and complete understanding of the present disclosure. It should be understood that the accompanying drawings and the embodiments of the present disclosure are only for exemplary purposes, and are not intended to limit the scope of protection of the present disclosure.

It should be understood that the various steps described in the method implementations of the present disclosure may be performed in different orders, and/or performed in parallel. Furthermore, additional steps may be included and/or the execution of the illustrated steps may be omitted in the method implementations. The scope of the present disclosure is not limited in this respect.

The term "include" used herein and the variations thereof are an open-ended inclusion, namely, "include but not limited to". The term "based on" is "at least partially based on". The term "an embodiment" means "at least one embodiment". The term "another embodiment" means "at least one another embodiment". The term "some embodiments" means "at least some embodiments". Related definitions of the other terms will be given in the description below.

It should be noted that concepts such as "first" and "second" mentioned in the present disclosure are only used to distinguish different apparatuses, modules, or units, and are not used to limit the sequence of functions performed by these apparatuses, modules, or units or interdependence.

It should be noted that the modifiers "one" and "a plurality of" mentioned in the present disclosure are illustrative and not restrictive, and those skilled in the art should understand that unless the context clearly indicates otherwise, the modifiers should be understood as "one or more".

The names of messages or information exchanged between a plurality of apparatuses in the implementations of the present disclosure are used for illustrative purposes only, and are not used to limit the scope of these messages or information.

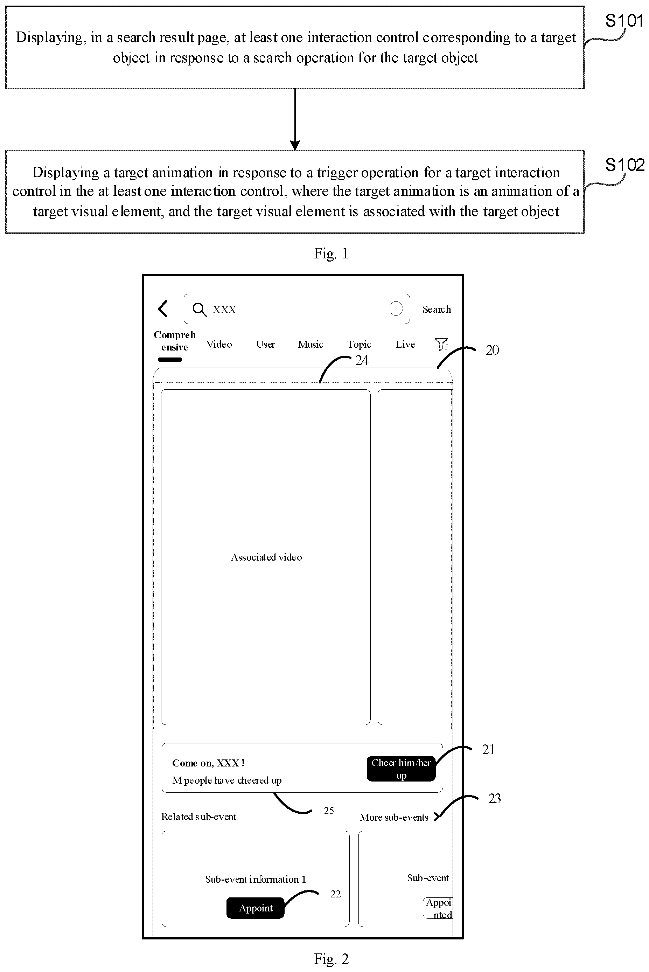

Fig. 1 is a schematic flowchart of an interaction method according to an embodiment of the present disclosure. The method may be performed by an interaction apparatus, where the apparatus may be implemented by software and/or hardware, and may be configured in an electronic device, for example, may be configured in a mobile phone or a tablet computer. The interaction method provided in this embodiment of the present disclosure is applicable to a scenario of searching for people or teams, and is particularly applicable to a scenario of searching for participants or participant teams of matches. As illustrated by Fig. 1, the interaction method provided in this embodiment may include the following steps.

S101: displaying, in a search result page, at least one interaction control corresponding to a target object in response to a search operation for the target object.

The target object may be understood as a to-be-searched object, and the to-be-searched object may include a target person, a target team, or another object. The target person may be considered as a to-be-searched person, for example, a participant or any other person of an event. The target team may be considered as a to-be-searched team, for example, a participant team or another team formed by people of an event. For example, the event may include a match. The search operation may be considered as a trigger operation used to indicate to search for the target object, for example, an operation of inputting to-be-searched information related to the target object in a search input box, and then triggering a search control. The to-be-searched information may be, for example, a name, an identifier, or an abbreviation of the target object.

The interaction control may be a control used to interact with the target object. In other words, an interaction object of the interaction control is the target object found by a user through the search operation. For example, the interaction control may include but is not limited to a cheer-up control, an applaud control, a blessing-send control, a thumb-up control, a thank control, and/or a remembrance control. Each interaction control may be displayed when the user searches for the target object and a current condition meets a display condition of the interaction control. For example, the cheer-up control may be displayed during an event in which the target object participates, for cheering up the target object; the applaud control is used for display after the target object wins an award, for applauding the target object; the blessing-send control may be displayed on the birthday and/or anniversary of the target object, for sending birthday blessings/anniversary blessings to the target object; the thumb-up control/thank control may be displayed after the target object completes an event, and is used to thumb up for the target object/express thanks to the target object; and the remembrance control is used for display after the death of the target object, for example, on the birthday, the anniversary of the birth, or other anniversaries of the target object, and is used to express remembrance for the target object.

In this embodiment, when the user searches for the target object, an interaction control that corresponds to the target object and that meets a display condition of the interaction control may be displayed in the search result page, so that the user interacts with the target object by using the displayed interaction control, thereby simplifying operations required for interaction between the user and the target object.

For example, when the user wants to search for an object, the user may input, in a search input box, to-be-searched information related to the object that the user wants to search for, for example, input a name of the object that the user wants to search for, and perform a search operation. In this way, when receiving the search operation of the user, a current application may obtain a search result matching the search information input by the user in the search input box, and display, in the search result page, the search result and/or at least one interaction control corresponding to the target object.

When the at least one interaction control corresponding to the target object is displayed, the interaction control may be included in the search result of the target object for display, or may be displayed independent of the search result of the target object.

By using an example in which the interaction control is included in the search result of the target object, the search result may be, for example, an object card 20 of the target object, for example, the object card 20 of the target object may be used as a search result matching the to-be-search information for display. In this case, when the search operation for the target object is received, the object card 20 of the target object may be displayed in the search result page, and the at least one interaction control corresponding to the target object is displayed in the object card 20, as illustrated by Fig. 2 (an example in which the interaction control is the cheer-up control 21 is used in the figure).

As illustrated by Fig. 2, the object card 20 is not only used to display the at least one interaction control of the target object, but also used to display other card content, for example, used to play an associated video of the target object and/or used to display object information (not shown in the figure) of the target object. When the target object is a participant object of an event, the object card may be further used to display information about a sub-event that the target object has participated in the event. In this way, the user may view, by using the object card 20 of the target object, the information about the sub-event that the target object has participated in the corresponding event, and may appoint to watch, by triggering an appointment control 22 corresponding to the sub-event information, live streaming of the sub-event corresponding to the corresponding sub-event information, and/or trigger a more-sub-event control 23 to switch to a sub-event page to view all sub-event information of the corresponding event.

It may be understood that, when none of current conditions meet a display condition of each interaction control, the search result of the target object may be displayed only in the search result page, and the interaction control corresponding to the target object is not displayed, or, the interaction control is displayed as a non-triggerable state, and this is not limited in this embodiment.

S102: displaying a target animation in response to a trigger operation for a target interaction control in the at least one interaction control, where the target animation is an animation of a target visual element, and the target visual element is associated with the target object.

The target interaction control may be an interaction control triggered by the user. The target animation may be an animation of a target visual element. The target visual element may be a visual element associated with the target object. For example, the target visual element may be a visual element associated with a theme of interaction between the target object and the target interaction control. For example, when the target interaction control is the cheer-up control, the target visual element may be an element of a corresponding event/sub-event that the target object has participated. Using a match as an example, when the event/sub-event that the target object has participated is a football match/basketball match/Ping-Pong match, the target visual element may be a football/basketball/Ping-Pong, or the like; when the target interaction control is the applaud control, the target visual element may be a visual element such as a trophy won by the target object; when the target interaction control is the blessing-send control, the target visual element may be a visual element such as a birthday cake associated with the target object; when the target interaction control is the thumb-up control, the target visual element may be a visual element such as a thumb-up gesture associated with the target object; when the target interaction control is the thank control, the target visual element may be a visual element used to express thanks to the target object; and when the target interaction control is the remembrance control, the target visual element may be a visual element used to express remembrance to the target object such as a candle. When objects searched by the user and/or interaction controls triggered by the user are different, target visual elements may be different. Specific types of the target visual element and specific picture content of the target animation are not limited in this embodiment.

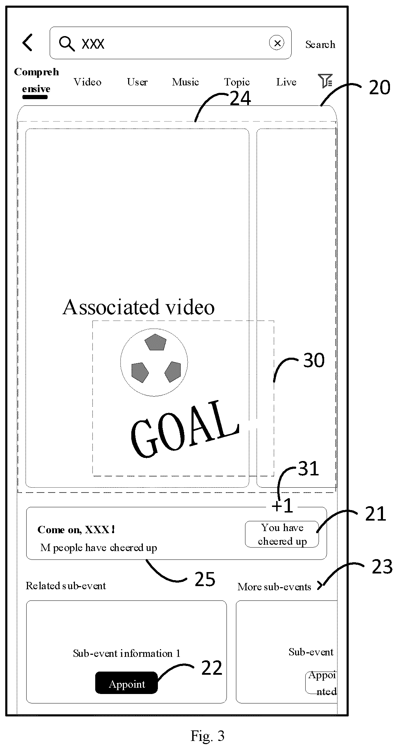

For example, when the trigger operation for the target interaction control is received, for example, when it is detected that the user triggers the target interaction control, a target animation 30 of the target visual element associated with the target interaction control may be displayed. For example, the target animation 30 is displayed at an upper layer of original page content displayed in the search result page, as illustrated by Fig. 3 (an example in which the target interaction control is the cheer-up control 21 and the target visual element is a football is used in the figure).

In this embodiment, the interaction control corresponding to the target object is displayed in the search result page of the target object, and when the user triggers an interaction control, an animation of a visual element associated with the target object is displayed, so that the user can interact with the target object in the search result page of the target object. This not only can enrich interaction functions supported by the search result page, and simplify operations required for interaction between the user and the target object, but also can enrich interaction forms during interaction with the target object, and enrich display content of the search result page.

In some implementations, when the interaction control corresponding to the target object is displayed, a quantity of times of interaction corresponding to each interaction control may be further displayed, for example, a quantity M of times of interaction corresponding to the cheer-up control 21 shown in Fig. 2. In this way, when it is detected that the user triggers the target interaction control, not only the target animation is displayed, but also the quantity of times of interaction corresponding to the target interaction control may be further updated. For example, when it is detected that the user triggers the cheer-up control 21, the quantity of times of interaction corresponding to the cheer-up control 21 may be updated from M to M+1.

In this case, optionally, the interaction method provided in this embodiment further includes: updating a quantity of times of target interaction of the target object in response to the search operation, where the quantity of times of target interaction is a quantity of times of interaction corresponding to the target interaction control.

The quantity of times of target interaction may be understood as a quantity of times of interaction corresponding to the target interaction control. A quantity of times of interaction corresponding to an interaction control may be understood as a total quantity of times of interaction performed by each user with the target object by triggering the interaction control, for example, a total quantity of times of cheer-up/applaud/blessing-send/thumb-up operations by different users for the target object, a total quantity of times of thanks expression performed by different users for the target object, or a total quantity of times of remembrance performed by different users for the target object. The total quantity of times may be a total quantity of people or a total quantity of person-times. For example, for each interaction control, if a same user can trigger the interaction control once at most, the quantity of times of interaction corresponding to the interaction control may be the total quantity of people. If a same user can trigger the interaction control for one or more times in different trigger periods, the total quantity of times corresponding to the interaction control may be the total quantity of person-times. This is not limited in this embodiment. Using the cheer-up control as an example, the cheer-up control may be set to be triggered once by each user each day. In this case, the quantity of times of interaction corresponding to the cheer-up control may be the total quantity of person-times for cheering up the target object by the users by triggering the cheer-up control.

In some implementations, when it is detected that the user triggers the target interaction control, not only the target animation is displayed, but also a display style of the target interaction control may be further switched. For example, the target interaction control is switched from a first display style to a second display style, as illustrated by Fig. 2 and Fig. 3 (an example in which the target interaction control is the cheer-up control 21 is used in the figure). In this case, optionally, the interaction method provided in this embodiment further includes: switching the target interaction control from a first display style to a second display style in response to the search operation. The first display style and the second display style may be different display styles. For example, the user may be prompted, in the first display style, that the target interaction control can be triggered; and the user is prompted, in the second display style, that the user has triggered the target interaction control in the current trigger period, or the user is prompted, in the second display style, that the target interaction control cannot be triggered at present.

In some implementations, when it is detected that the user triggers the target interaction control, not only the target animation is displayed, but also interaction prompt information 31 (for example, "+1" shown in Fig. 3) may be further displayed, and the interaction prompt information 31 is used to prompt that interaction between the user and the target object succeeds. The interaction prompt information 31 may be displayed at a preset position of the search result page, or may be displayed at a position associated with the target interaction control. In this case, optionally, the interaction method provided in this embodiment further includes: displaying interaction prompt information at an associated position of the target interaction control in response to the search operation, where the interaction prompt information is used to prompt that interaction of the target object succeeds.

It should be noted that, a sequence of displaying the target animation, updating a quantity of times of target interaction, switching a display style the target interaction control, and displaying the interaction prompt information may be flexibly set according to requirements. For example, at least two of the foregoing operations may be performed at the same time, or at least two of the foregoing operations may be sequentially performed according to a preset sequence. This is not limited in this embodiment.

In the interaction method provided in this embodiment, the at least one interaction control corresponding to the target object is displayed in the search result page in response to the search operation for the target object; and the target animation is displayed in response to the trigger operation for the target interaction control in the at least one interaction control, where the target animation is an animation of the target visual element, and the target visual element is associated with the target object. In this embodiment, by using the foregoing technical solution, the interaction control corresponding to the target object is displayed in the search result page of the target object, and when the user triggers an interaction control, the animation of the visual element associated with the target object is displayed. This not only can enrich interaction functions supported by the search result page, and simplify operations required for interaction between the user and the target object, but also can enrich interaction forms during interaction with the target object, and enrich display content of the search result page.

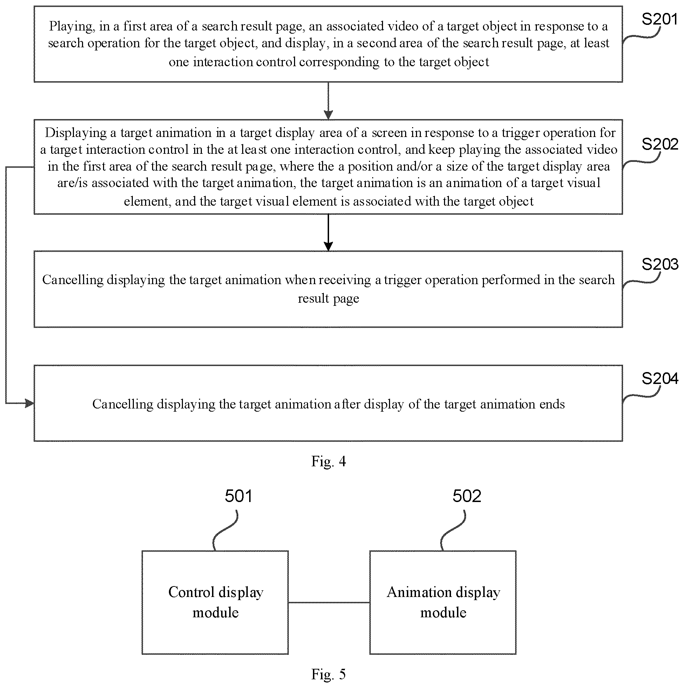

Fig. 4 is a schematic flowchart of another interaction method according to an embodiment of the present disclosure. The solutions in this embodiment may be combined with one or more optional solutions in the foregoing embodiment. Optionally, the displaying, in a search result page, at least one interaction control corresponding to a target object includes: playing, in a first area of the search result page, an associated video of the target object, and displaying, in a second area of the search result page, the at least one interaction control corresponding to the target object.

Optionally, the displaying a target animation includes: displaying the target animation, and keeping playing the associated video in the first area of the search result page.

Optionally, the displaying a target animation includes: displaying the target animation in a target display area of a screen, where a position and/or a size of the target display area are/is related to the target animation.

Optionally, after the displaying a target animation, the method further includes: canceling displaying the target animation when receiving the trigger operation performed in the search result page; or canceling displaying the target animation after display of the target animation ends.

Correspondingly, as illustrated by Fig. 4, the interaction method provided in this embodiment may include the following steps.

S201: playing, in the first area of the search result page, the associated video of the target object in response to the search operation for the target object, and display, in the second area of the search result page, the at least one interaction control corresponding to the target object.

The associated video of the target object may be considered as a video associated with the target object, and may include a live streaming video and/or a non-live streaming video. For example, the associated video may be a video in which the target object is shot, for example, a match video of the target object, or may be a video shot by the target object, for example, a live streaming enabled by the target object or a video released by the target object. The first area may be an area that is in the search result page and that is used to play the associated video of the target object, and may be located in the object card of the target object and/or outside the object card of the target object. To be specific, one or more first areas may exist in the search result page, and the one or more first areas may include or not include first areas located in the object card of the target object. The second area may be an area that is in the search result page and that is used to display the interaction control corresponding to the target object, and may be located in the object card of the target object or outside the object card of the target object.

In this embodiment, when the search operation for the target object is received, the associated video of the target object may be further obtained, and the associated video of the target object is played in the search result page, for the user to watch.

Using an example in which the first area 24 and the second area 25 are located in the object card 20 of the target object, as illustrated by Fig. 2, when the search operation for the target object is received, the object card 20 of the target object may be displayed in the search result page in response to the search operation, the associated video of the target object is played in the first area 24 of the object card 20, and the at least one interaction control corresponding to the target object is displayed in the second area 25 of the object card 20.

In this way, the user may watch the associated video of the target object in the first area 24, and/or, switch the associated video played in the first area 24 by performing a video switching operation; or may interact with the target object by using the interaction control displayed in the second area 25. The video switching operation may be understood as a trigger operation for indicating, by the user, to switch the associated video played in the first area 24 of the object card 20, for example, a horizontal sliding operation or a vertical sliding operation performed in the first area 24. A part of a video cover of a next associated video may be further displayed in the first area 24, to prompt the user to switch watching different associated videos of the target object.

S202: displaying the target animation in a target display area of the screen in response to the trigger operation for the target interaction control in the at least one interaction control, and keep playing the associated video in the first area of the search result page, and perform S203 or S204, where the a position and/or a size of the target display area are/is associated with the target animation, the target animation is an animation of the target visual element, and the target visual element is associated with the target object.

In this embodiment, display of the target animation does not block display of content in the search result page. For example, before the trigger operation for the target interaction control is received, the associated video of the target object is played in the search result page. When the target animation is displayed in response to the trigger operation for the target interaction control, play of the associated video may be kept, so that the user can watch the target animation and the associated video of the target object at the same time, thereby ensuring continuity of playing the associated video.

In this embodiment, different display areas of the animation of the visual element associated with the target object may be pre-disposed in the screen. For example, an upper display area, a middle display area, and a lower display area may be disposed in the screen. The upper display area may be a display area in which an upper boundary of a screen visible area is an upper boundary; the middle display area may be a display area in which a horizontal center line of the screen visible area is a center line; and the lower display area may be a display area in which a lower boundary of the screen visible area is a lower boundary. A width of each display area may be the same as a width of the screen visible area, and a width-to-height ratio of each display area may be a width-to-height ratio such as 1:1, 3:4, or 4:3, which may specifically match a width-to-height ratio of an animation that needs to be displayed. Fr example, several width-to-height ratios that can be selected by a designer may be preset, for the designer to make an animation design based on the width-to-height ratios, or a size of the display area may be determined according to a width-to-height ratio of an animation of a visual element associated with the target object when the animation needs to be displayed. This is not limited in this embodiment.

For example, when the trigger operation for the target interaction control is received, the target animation of the target visual element associated with the target object may be obtained, a position of the target display area is determined according to a display area identifier carried in animation information of the target animation, a size of the target display area is determined according to width-to-height ratio information carried in the animation information of the target animation or according to width-to-height information of a picture in the target animation, the target animation is displayed in the target display area of the screen, and play of the associated video of the target object is kept in the first area of the search result page. The target display area may be an area used to display the target animation.

In addition, when the trigger operation for the target interaction control is received, the position of the target display area may alternatively be determined according to a trigger position (for example, a current display position of the target interaction control in the screen) of the trigger operation, the size of the target display area is determined according to the width-to-height ratio information of the target animation, and the target animation is displayed in the target display area.

Therefore, because the width-to-height ratio of the target display area matches the width-to-height ratio of the target animation, a picture of the target animation can be completely displayed in the target display area provided that proportional scaling is performed on the picture of the target animation, to avoid a case in which the target animation is not fully displayed or the target animation needs to be cut, thereby further improving a display effect of the target animation.

S203: cancelling displaying the target animation after receiving the trigger operation performed in the search result page.

In this embodiment, display of the target animation does not block interaction supported in the search result page. To be specific, when the target animation is displayed, the user can still control, by performing a corresponding trigger operation, page content displayed in the search result page. The page content may include the target animation and/or original page content in the search result page before the target animation is displayed.

Specifically, when the trigger operation performed in the search result page is received, display of the target animation may be canceled. For example, when the trigger operation for the target animation is received, display of the target animation may be canceled; and when the trigger operation for the original page content in the search result page is received, display of the target animation may be canceled, and the original page content in the search result page is controlled based on the trigger operation.

In this embodiment, display canceling manners of the target animation that correspond to different trigger operations performed in the search result page may be the same or different. In other words, when different trigger operations performed in the search result page are received, display of the target animation may be canceled in same or different display canceling manners, and this may be specifically set according to requirements.

In some implementations, when the trigger operation performed in the search result page is received, canceling displaying the target animation includes: when receiving the trigger operation performed in the search result page, canceling, in a display canceling manner corresponding to the currently received trigger operation, displaying the target animation.

Specifically, when the trigger operation performed in the search result page is received, a display canceling manner corresponding to the trigger operation may be determined, and display of the target animation may be canceled in the display canceling manner. The display canceling manner may include, for example, at least one of immediate canceling of display and gradual canceling of display, and the gradual canceling of display may include canceling display in a fade-out manner and/or moving out of a visible area of the screen, or the like. Canceling display in the fade-out manner may be understood as a display canceling manner of decreasing transparency of the target animation gradually to 0.

For example, when the trigger operation for the target animation is received, display of the target animation may be immediately canceled; when a page switching operation for the search result page is received, display of the target animation may be canceled in the display canceling manner of the search result page, for example, the target animation is controlled to synchronously move with the search result page; and when another trigger operation that is other than the trigger operation for the target animation and the page switching operation and that is performed in the search result page is received, display of the target animation may be canceled in the fade-out manner.

S204: cancelling displaying the target animation after display of the target animation ends.

In this embodiment, when display of the target animation ends, for example, when play of the target animation ends, display of the target animation may be canceled, for example, display of the target animation is immediately canceled, or the target animation is gradually canceled. The manner of canceling displaying the target animation when display of the target animation ends is not limited in this embodiment.

In the interaction method provided in this embodiment, on the premise that display and interaction of the original page content in the search result page are not blocked, the target animation is displayed, and when different conditions are met, display of the target animation is canceled in a corresponding display canceling manner, so that the user can watch the target animation and the original page content in the search result page at the same time, and interact with the original page content in the search result page, thereby providing convenience for the user to watch the page content in the search result page or interact with the page content in the search result page.

Fig. 5 is a block diagram of a structure of an interaction apparatus according to an embodiment of the present disclosure. The apparatus may be implemented by software and/or hardware, may be configured in an electronic device, for example, may be configured in a mobile phone or a tablet computer, and may search for or interact with a person or a team by performing an interaction method. As illustrated by Fig. 5, the interaction apparatus provided in this embodiment may include a control display module 501 and an animation display module 502, where

the control display module 501 is configured to display, in a search result page, at least one interaction control corresponding to a target object in response to a search operation for the target object; and

the animation display module 502 is configured to display a target animation in response to a trigger operation for a target interaction control in the at least one interaction control, where the target animation is an animation of a target visual element, and the target visual element is associated with the target object.

In the interaction apparatus provided in this embodiment, the at least one interaction control corresponding to the target object is displayed, by the control display module, in the search result page in response to the search operation for the target object; and the target animation is displayed, by the animation display module, in response to the trigger operation for the target interaction control in the at least one interaction control, where the target animation is an animation of the target visual element, and the target visual element is associated with the target object. In this embodiment, by using the foregoing technical solution, the interaction control corresponding to the target object is displayed in the search result page of the target object, and when the user triggers an interaction control, the animation of the visual element associated with the target object is displayed. This not only can enrich interaction functions supported by the search result page, and simplify operations required for interaction between the user and the target object, but also can enrich interaction forms during interaction with the target object, and enrich display content of the search result page.

In the foregoing solution, the control display module 501 may be configured to: play, in a first area of the search result page, an associated video of the target object, and display, in a second area of the search result page, the at least one interaction control corresponding to the target object.

In the foregoing solution, the animation display module 502 may be configured to: display the target animation, and keep playing the associated video in the first area of the search result page.

In the foregoing solution, the animation display module 502 may be configured to display the target animation in a target display area of a screen, where a position and/or a size of the target display area are/is related to the target animation.

In the foregoing solution, the animation display module 502 may be configured to perform at least one of the following: updating a quantity of times of target interaction of the target object in response to the search operation, where the quantity of times of target interaction is a quantity of times of interaction corresponding to the target interaction control; switching the target interaction control from a first display style to a second display style in response to the search operation; and displaying interaction prompt information at an associated position of the target interaction control in response to the search operation, where the interaction prompt information is used to prompt that interaction of the target object succeeds.

Further, the interaction apparatus provided in this embodiment may further include: a display canceling module, configured to: cancel displaying the target animation when receiving the trigger operation performed in the search result page after the target animation is displayed; or cancel displaying the target animation after display of the target animation ends.

In the foregoing solution, the display canceling module may be configured to: when receiving the trigger operation performed in the search result page, cancel, in a display canceling manner corresponding to the currently received trigger operation, displaying the target animation.

The interaction apparatus provided in this embodiment of the present disclosure can perform the interaction method provided in any embodiment of the present disclosure, and has corresponding function modules for performing the interaction method and beneficial effects. For technical details that are not described in detail in this embodiment, reference may be made to the interaction method provided in any embodiment of the present disclosure.

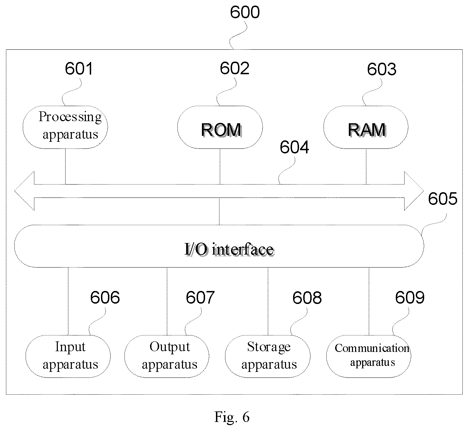

The following shows, with reference to Fig. 6, a diagram of a structure of an electronic device (for example, a terminal device) 600 adapted to implement embodiments of the present disclosure. The terminal device in this embodiment of the present disclosure may include, but not limited to, a mobile terminal such as a mobile phone, a notebook computer, a digital broadcast receiver, a PDA (personal digital assistant), a PAD (tablet computer), a PMP (portable multimedia player), and a vehicle terminal (such as a vehicle navigation terminal), as well as a fixed terminal such as a digital TV and a desktop computer. The electronic device shown in Fig. 6 is merely an example, and should not constitute any limitation on functions and use scope of embodiments of the present disclosure.

As illustrated by Fig. 6, the electronic device 600 may include a processing apparatus (for example, a central processing unit, a graphics processor, or the like) 601 that may perform various suitable actions and processing according to a program stored in a read-only memory (ROM) 602 or loaded from a storage apparatus 608 into a random access memory (RAM) 603. The RAM 603 also stores various programs and data necessary for an operation of the electronic device 600. The processing apparatus 601, the ROM 602, and the RAM 603 are connected to each other through a bus 604. An input/output (I/O) interface 605 is also connected to the bus 604.

Usually, the following apparatuses may be connected to the I/O interface 605: an input apparatus 606 including, for example, a touchscreen, a touchpad, a keyboard, a mouse, a camera, a microphone, an accelerometer, a gyroscope, or the like; an output apparatus 607 including, for example, a liquid crystal display (LCD), a speaker, a vibrator, or the like; a storage apparatus 608 including, for example, a magnetic tape, a hard disk, or the like; and a communication apparatus 609. The communication apparatus 609 may allow the electronic device 600 to communicate in a wireless or wired manner with another device to exchange data. Although Fig. 6 shows the electronic device 600 with various apparatuses, it should be understood that it is not required to implement or own all the shown apparatuses. More or fewer apparatuses may alternatively be implemented or owned.

In particular, according to embodiments of the present disclosure, the foregoing process described with reference to a flowchart may be implemented as a computer software program. For example, an embodiment of the present disclosure includes a computer program product, including a computer program carried on a non-transient computer-readable medium, and the computer program includes program code for executing the method shown in a flowchart. In such an embodiment, the computer program may be downloaded and installed from a network through the communication apparatus 609, or installed from the storage apparatus 608, or installed from the ROM 602. When the computer program is executed by the processing apparatus 601, the foregoing functions defined in the method of this embodiment of the present disclosure are executed.

It should be noted that the above computer-readable medium described in the present disclosure may be a computer-readable signal medium, a computer-readable storage medium, or any combination thereof. The computer-readable storage medium may be, for example but not limited to, electric, magnetic, optical, electromagnetic, infrared, or semiconductor systems, apparatuses, or devices, or any combination thereof. A more specific example of the computer-readable storage medium may include, but is not limited to: an electrical connection having one or more wires, a portable computer magnetic disk, a hard disk, a random access memory (RAM), a read-only memory (ROM), an erasable programmable read-only memory (EPROM) (or a flash memory), an optical fiber, a portable compact disc read-only memory (CD-ROM), an optical storage device, a magnetic storage device, or any suitable combination thereof. In the present disclosure, the computer-readable storage medium may be any tangible medium containing or storing a program which may be used by or in combination with an instruction execution system, apparatus, or device. In the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may also be any computer-readable medium other than the computer-readable storage medium. The computer-readable signal medium can send, propagate, or transmit a program used by or in combination with an instruction execution system, apparatus, or device. The program code contained in the computer-readable medium may be transmitted by any suitable medium, including but not limited to: electric wires, optical cables, radio frequency (RF), etc., or any suitable combination thereof.

In some implementations, a client and a server may communicate using any currently known or future-developed network protocol such as the Hypertext Transfer Protocol (HTTP), and may be connected to digital data communication (for example, a communication network) in any form or medium. Examples of the communication network include a local area network ("LAN"), a wide area network ("WAN"), an internetwork (for example, the Internet), a peer-to-peer network (for example, an ad hoc peer-to-peer network), and any currently known or future-developed network.

The above computer-readable medium may be contained in the above electronic device. Alternatively, the computer-readable medium may exist independently, without being assembled into the electronic device.

The above computer-readable medium carries one or more programs that, when executed by the electronic device, cause the electronic device to: perform, in response to a shooting trigger operation, image capture by using a target shooting apparatus, to obtain a first image, and display the first image in a shooting interface; obtain an uploaded image as a second image in response to an uploading trigger operation, display the second image in the shooting interface, and determine at least one third image from the second image; and display, in response to a special effect trigger operation, a special effect image corresponding to the first image and the third image.

Computer program code for performing operations of the present disclosure can be written in one or more programming languages or a combination thereof, where the programming languages include but are not limited to object-oriented programming languages, such as Java, Smalltalk, and C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case of the remote computer, the remote computer may be connected to the computer of the user through any kind of network, including a local area network (LAN) or a wide area network (WAN), or may be connected to an external computer (for example, connected through the Internet with the aid of an Internet service provider).

The flowchart and block diagram in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The related units described in the embodiments of the present disclosure may be implemented by software, or may be implemented by hardware. Names of the units do not constitute a limitation on the units themselves in some cases, for example, a first obtaining unit may alternatively be described as "a unit for obtaining at least two Internet protocol addresses".

The functions described herein above may be performed at least partially by one or more hardware logic components. For example, without limitation, exemplary types of hardware logic components that may be used include: a field programmable gate array (FPGA), an application-specific integrated circuit (ASIC), an application-specific standard product (ASSP), a system-on-chip (SOC), a complex programmable logic device (CPLD), and the like.

In the context of the present disclosure, a machine-readable medium may be a tangible medium that may contain or store a program used by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random access memory (RAM), a read-only memory (ROM), an erasable programmable read-only memory (EPROM) (or a flash memory), an optic fiber, a portable compact disc read-only memory (CD-ROM), an optical storage device, a magnetic storage device, or any suitable combination thereof.

According to one or more embodiments of the present disclosure, [Example 1] provides an interaction method, which includes: displaying, in a search result page, at least one interaction control corresponding to a target object in response to a search operation for the target object; and displaying a target animation in response to a trigger operation for a target interaction control in the at least one interaction control, wherein the target animation is an animation of a target visual element, and the target visual element is associated with the target object.

According to one or more embodiments of the present disclosure, [Example 2] provides the method according to Example 1, where the displaying, in a search result page, at least one interaction control corresponding to a target object includes: playing, in a first area of the search result page, an associated video of the target object, and displaying, in a second area of the search result page, the at least one interaction control corresponding to the target object.

According to one or more embodiments of the present disclosure, [Example 3] provides the method according to Example 2, where the displaying a target animation includes: displaying the target animation, and keeping playing the associated video in the first area of the search result page.

According to one or more embodiments of the present disclosure, [Example 4] provides the method according to Example 1, where the displaying a target animation includes: displaying the target animation in a target display area of a screen, wherein a position and/or a size of the target display area are/is related to the target animation.

According to one or more embodiments of the present disclosure, [Example 5] provides the method according to any one of Examples 1-4, further including at least one of the following: updating a quantity of times of target interaction of the target object in response to the search operation, wherein the quantity of times of target interaction is a quantity of times of interaction corresponding to the target interaction control; switching the target interaction control from a first display style to a second display style in response to the search operation; and displaying interaction prompt information at an associated position of the target interaction control in response to the search operation, wherein the interaction prompt information is used to prompt that interaction of the target object succeeds.

According to one or more embodiments of the present disclosure, [Example 6] provides the method according to any one of Examples 1-4, where after the displaying a target animation, the method further includes: canceling displaying the target animation after receiving a trigger operation performed in the search result page; or canceling displaying the target animation after display of the target animation ends.

According to one or more embodiments of the present disclosure, [Example 7] provides the method according to Example 6, where the canceling displaying the target animation after receiving the trigger operation performed in the search result page includes: when receiving the trigger operation performed in the search result page, canceling, in a display canceling manner corresponding to the currently received trigger operation, displaying the target animation.

According to one or more embodiments of the present disclosure, [Example 8] provides an interaction apparatus, including: a control display module, configured to display, in a search result page, at least one interaction control corresponding to a target object in response to a search operation for the target object; and an animation display module, configured to display a target animation in response to a trigger operation for a target interaction control in the at least one interaction control, wherein the target animation is an animation of a target visual element, and the target visual element is associated with the target object.

According to one or more embodiments of the present disclosure, [Example 9] provides an electronic device, including: at least one processor; and a memory communicatively connected to the at least one processor, wherein the memory stores a computer program that can be executed by the at least one processor, and the computer program is executed by the at least one processor, so that the at least one processor can perform the interaction method according to any one of Examples 1-7.

According to one or more embodiments of the present disclosure, [Example 10] provides A computer-readable storage medium, wherein the computer-readable storage medium stores computer instructions, and when the computer instructions are executed by a processor, the interaction method according to any one of Examples 1-7 is implemented.

The foregoing descriptions are merely preferred embodiments of the present disclosure and explanations of the applied technical principles. Those skilled in the art should understand that the scope of disclosure involved in the present disclosure is not limited to the technical solutions formed by specific combinations of the foregoing technical features, and shall also cover other technical solutions formed by any combination of the foregoing technical features or equivalent features thereof without departing from the foregoing concept of disclosure. For example, a technical solution formed by a replacement of the foregoing features with technical features with similar functions disclosed in the present disclosure (but not limited thereto) also falls within the scope of the present disclosure.

In addition, although the various operations are depicted in a specific order, it should not be construed as requiring these operations to be performed in the specific order shown or in a sequential order. Under certain circumstances, multitasking and parallel processing may be advantageous. Similarly, although several specific implementation details are included in the foregoing discussions, these details should not be construed as limiting the scope of the present disclosure. Some features that are described in the context of separate embodiments can also be implemented in combination in a single embodiment. In contrast, various features described in the context of a single embodiment may alternatively be implemented in a plurality of embodiments individually or in any suitable sub-combination.

Although the subject matter has been described in a language specific to structural features and/or logical actions of the method, it should be understood that the subject matter defined in the appended claims is not necessarily limited to the specific features or actions described above. In contrast, the specific features and actions described above are merely exemplary forms of implementing the claims.

## Claims

1. An interaction method, comprising:
displaying, in a search result page, at least one interaction control corresponding to a target object in response to a search operation for the target object; and
displaying a target animation in response to a trigger operation for a target interaction control in the at least one interaction control, wherein the target animation is an animation of a target visual element, and the target visual element is associated with the target object.

2. The method according to claim **1,** wherein the displaying, in a search result page, at least one interaction control corresponding to a target object comprises:
playing, in a first area of the search result page, an associated video of the target object, and displaying, in a second area of the search result page, the at least one interaction control corresponding to the target object.

3. The method according to claim 2, wherein the displaying a target animation comprises:
displaying the target animation, and keeping playing the associated video in the first area of the search result page.

4. The method according to any one of claims 1 to 3, wherein the displaying a target animation comprises:
displaying the target animation in a target display area of a screen, wherein a position and/or a size of the target display area are/is related to the target animation.

5. The method according to any one of claims 1 to 4, further comprising at least one of the following:
updating a quantity of times of target interaction of the target object in response to the search operation, wherein the quantity of times of target interaction is a quantity of times of interaction corresponding to the target interaction control;
switching the target interaction control from a first display style to a second display style in response to the search operation; and
displaying interaction prompt information at an associated position of the target interaction control in response to the search operation, wherein the interaction prompt information is used to prompt that interaction of the target object succeeds.

6. The method according to any one of claims 1 to 5, wherein after the displaying a target animation, the method further comprises:
canceling displaying the target animation after receiving a trigger operation performed in the search result page; or
canceling displaying the target animation after display of the target animation ends.

7. The method according to claim 6, wherein the canceling displaying the target animation after receiving the trigger operation performed in the search result page comprises:
when receiving the trigger operation performed in the search result page, canceling, in a display canceling manner corresponding to the currently received trigger operation, displaying the target animation.

8. An interaction apparatus, comprising:
a control display module, configured to display, in a search result page, at least one interaction control corresponding to a target object in response to a search operation for the target object; and
an animation display module, configured to display a target animation in response to a trigger operation for a target interaction control in the at least one interaction control, wherein the target animation is an animation of a target visual element, and the target visual element is associated with the target object.

9. An electronic device, comprising:
at least one processor; and
a memory communicatively connected to the at least one processor, wherein
the memory stores a computer program that can be executed by the at least one processor, and the computer program is executed by the at least one processor, so that the at least one processor can perform the interaction method according to any one of claims 1 to 7.

10. A computer-readable storage medium, wherein the computer-readable storage medium stores computer instructions, and when the computer instructions are executed by a processor, the interaction method according to any one of claims 1 to 7 is implemented.
